# EUROPEAN PATENT APPLICATION

(11) **EP 4 691 248 A1**
(43) Date of publication of application: **11.02.2026**
(21) Application number: 24779400.1
(22) Date of filing: 12.03.2024
(51) Int. Cl.: A23D 9/00, A23G 1/36

(54) **OIL/FAT FOR CHOCOLATE PRODUCTS**

(30) Priority: 29.03.2023 JP 2023052973; 29.03.2023 JP 2023052974
(71) Applicant: Fuji Oil Company, Limited, Izumisano-shi Osaka 598-8540 (JP)
(72) Inventor: FUKAMI, Yojiro, Izumisano-shi, Osaka 598-8540 (JP); IWAOKA, Eiji, Izumisano-shi, Osaka 598-8540 (JP); KURIYAMA, Masamitsu, Izumisano-shi, Osaka 598-8540 (JP)
(74) Representative: Becker, Eberhard
(86) International application number: PCT/JP2024/009493
(87) International publication number: WO 2024/203270

(57) **Abstract**

[Problem] To provide an oil/fat that suppresses the occurrence of blooming and/or graining in chocolate products. To provide an oil/fat that suppresses the occurrence of blooming and/or graining particularly in soft chocolate products. To provide an oil/fat that suppresses the occurrence of blooming in chocolate products without adversely affecting the meltability in the mouth. [Solution] This oil/fat for chocolate products satisfies all of the following requirements (a) to (e). (a) The content of trans fatty acids in the total amount of all of constituent fatty acids is 5 wt% or less; (b) the content of saturated fatty acids each having a chain length of 16 or more carbon atoms in the total amount of all of constituent fatty acids is 20-60 wt%; (c) the content of CN38-CN46 triglycerides in the total amount of all of triglycerides is 40 wt% or less; (d) the content of SO2 triglycerides in the total amount of all of triglycerides is 40 wt% or less; and (e) the content of S2O triglycerides in the total amount of all of triglycerides is 10-40 wt%. Herein, the term "CN38-CN46 triglyceride" refers to a triglyceride in which the total number of carbon atoms in constituent fatty acids for the triglyceride in the oil/fat is 38-46, the term "SO2 triglyceride" refers to a triglyceride in which one S (wherein "S" refers to a saturated fatty acid having 16-20 carbon atoms, the same applies hereinafter) molecule and two O (wherein "O" refers to oleic acid, the same applies hereinafter) molecules are bound, and the term "S2O triglyceride" refers to a triglyceride in which two S molecules and one O molecule are bound.

## Description

### Technical Field

### Related Application

The present application claims the benefit of and priority to the Japan Patent Application No. 2023-052973 filed with the Japanese Patent Office on March 29, 2023, and the Japanese Patent Application No. 2023-052974 filed with the Japan Patent Office on March 29, 2023. Each of the priority applications is incorporated herein by reference in its entirety.

The present invention relates to an oil and/or fat for chocolate.

### Background Art

In addition to being used alone, chocolate is used in many foods as part of confectioneries or baked goods, and chocolate is also used for foods in a wide variety of forms. According to such forms for use, various functions are required for chocolate.

Among various types of chocolate, a first embodiment includes soft chocolate, which has a smooth and soft texture. For such soft chocolate, a liquid oil, such as soybean oil or rapeseed oil, and a slightly hydrogenated oil with a slip melting point of about 10°C to 20°C produced by hydrogenation of such a liquid oil as a raw material have been widely used in the art. The slightly hydrogenated oil is excellent in miscibility with cocoa butter, excellent in crystal properties when it is blended in chocolate, good in bloom resistance, and has a function suitable for soft chocolate; however, since the situation where the risk of trans fatty acids on health has been reported, there is a demand for oil and/or fat with low trans fatty acid content, in which the content of trans fatty acids in constituent fatty acid composition is reduced.

In a situation where there is a demand for oil and/or fat with low trans fatty acid content, which has a function suitable for soft chocolate, a method is disclosed in which a seed agent or an emulsifier is blended into existing oil and/or fat with low-melting point (Patent Document 1 and Patent Document 2). However, these are not intended to improve an oil and/or fat but to improve crystal properties when an additive is added and blended into chocolate.

As the oil and/or fat having a function suitable for soft chocolate, Patent Document 3 and Patent Document 4 disclose oil and/or fat with low trans fatty acid content, whose crystal properties are improved by interesterification.

Meanwhile, among various kinds of chocolate, a second embodiment includes chocolate with a high oil content. The chocolate with a high oil content is known to have a remarkably short period until the occurrence of bloom, and hence there is a demand for the development of a bloom inhibitor having a high bloom suppressing effect.

As a bloom inhibitor having a function suitable for chocolate with a high oil content, Patent Document 5 discloses a bloom inhibitor in which a triglyceride containing both a saturated fatty acid having 14 or less carbons and a saturated fatty acid having 20 or more carbons is used as an active ingredient. Patent Document 6 discloses a bloom inhibitor made from an interesterified oil and StOSt triglyceride.

### Citation List

### Patent Document

Patent Document 1: JP 2021-153438 A
Patent Document 2: WO 2019/194081
Patent Document 3: JP 2018-171001 A
Patent Document 4: JP 2018-171002 A
Patent Document 5: JP 2012-000039 A
Patent Document 6: JP 2020-156415 A

### Summary of Invention

### Technical Problem

The oil and/or fat with low trans fatty acid content disclosed in Patent Document 3 and Patent Document 4, which are known documents corresponding to the first embodiment, has sharp melting properties similar to those of cocoa butter in the mouth, but the disclosed oil and/or fat alone is slightly hard oil and/or fat for use in soft chocolate.

The present inventors have considered an issue occurring in soft chocolate produced using an oil and/or fat with low trans fatty acid content.

When an oil and/or fat with low trans fatty acid content is used for soft chocolate, crystals of the oil and/or fat on the surface of the chocolate may become coarse, resulting in a phenomenon called blooming. Moreover, an oil and/or fat having a relatively high melting point such as cocoa butter may be crystallized inside the chocolate, and a phenomenon called graining may occur due to granular oil and/or fat crystals or a coarse structure.

Furthermore, the similar blooming and/or graining phenomenon may occur when softening (lowering the melting point) of chocolate is intended by blending a small amount of oil and/or fat with low trans fatty acid content into chocolate.

Accordingly, an object of the present invention is to provide oil and/or fat with low trans fatty acid content, which reduces blooming and/or graining in chocolate. In particular, an object of the present invention is to provide oil and/or fat with low trans fatty acid content, which reduces blooming and/or graining in soft chocolate.

Meanwhile, a melting texture in the mouth may be deteriorated due to the presence of a saturated fatty acid having 20 or more carbons in Patent Document 5, and due to the presence of StOSt triglyceride in Patent Document 6, each of which is a prior art document corresponding to the second embodiment. That is, there is a demand for providing an oil and/or fat for suppressing bloom, which has a bloom suppressing effect without adversely affecting a melting texture in the mouth.

Accordingly, an object of the present invention is to provide an oil and/or fat with low trans fatty acid content, which is for suppressing bloom and uses an oil and/or fat with a low solid fat content.

### Solution to Problem

As a result of intensive studies to solve the issue mentioned above, the present inventors have found, contrary to the initial assumption, that the foregoing issue can be solved by using an oil and/or fat for chocolate, which contains a large amount of saturated fatty acids having a chain length of 16 or more carbons, where the content of CN38 to CN46 triglycerides, the content of SO2 triglycerides, and the content of S2O triglycerides are each in a specific range, and thereby having completed the present invention.

That is, the present invention includes the following inventions:
(1) An oil and/or fat for chocolate, satisfying all requirements (a) to (e) set forth below:
   (a) the content of trans fatty acids is 5 wt.% or less among all constituent fatty acids;
   (b) the content of saturated fatty acids having a chain length of 16 or more carbons is from 20 to 60 wt.% among all constituent fatty acids;
   (c) the content of CN38 to CN46 triglycerides is 40 wt.% or less among all triglycerides;
   (d) the content of SO2 triglycerides is 40 wt.% or less among all triglycerides; and
   (e) the content of S2O triglycerides is from 10 to 40 wt.% among all triglycerides.
   It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.
(2) The oil and/or fat for chocolate according to (1), further satisfying requirements (c2), (d2), and (f) set forth below:
   (c2) the content of CN38 to CN46 triglycerides is from 10 to 35 wt.% among all triglycerides;
   (d2) the content of SO2 triglycerides is 30 wt.% or less among all triglycerides; and
   (f) the content of lauric acid is from 1 to 13 wt.% among all constituent fatty acids.
(3) The oil and/or fat for chocolate according to (1), wherein the content of unsaturated fatty acids is from 35 to 58 wt.% among all constituent fatty acids.
(4) The oil and/or fat for chocolate according to (2), wherein the content of unsaturated fatty acids is from 35 to 58 wt.% among all constituent fatty acids.
(5) The oil and/or fat for chocolate according to (1), satisfying all requirements for SFC% set forth below:
   · SFC at 0°C is from 10 to 60%;
   · SFC at 5°C is from 5 to 50%;
   · SFC at 10°C is 40% or less; and
   · SFC at 20°C is 9% or less.
(6) The oil and/or fat for chocolate according to (2), satisfying all requirements for SFC% set forth below:
   · SFC at 0°C is from 10 to 60%;
   · SFC at 5°C is from 5 to 50%;
   · SFC at 10°C is 40% or less; and
   · SFC at 20°C is 9% or less.
(7) The oil and/or fat for chocolate according to (3), satisfying all requirements for SFC% set forth below:
   · SFC at 0°C is from 10 to 60%;
   · SFC at 5°C is from 5 to 50%;
   · SFC at 10°C is 40% or less; and
   · SFC at 20°C is 9% or less.
(8) The oil and/or fat for chocolate according to (4), satisfying all requirements for SFC% set forth below:
   · SFC at 0°C is from 10 to 60%;
   · SFC at 5°C is from 5 to 50%;
   · SFC at 10°C is 40% or less; and
   · SFC at 20°C is 9% or less.
(9) Chocolate made by using from 5 to 65 wt.% of the oil and/or fat for chocolate according to (1) to (8).
(10) The oil and/or fat for chocolate according to (1), further satisfying requirement (g) set forth below:
   (g) SFC at 10°C is from 5 to 40%.
(11) The oil and/or fat for chocolate according to (1), wherein the ratio of palmitic acid content/stearic acid content is 7 or less in constituent fatty acid composition.
(12) The oil and/or fat for chocolate according to (10), wherein the ratio of palmitic acid content/stearic acid content is 7 or less in constituent fatty acid composition.
(13) The oil and/or fat for chocolate according to (1), wherein the content of lauric acid is 13 wt.% or less among all constituent fatty acids.
(14) The oil and/or fat for chocolate according to (10), wherein the content of lauric acid is 13 wt.% or less among all constituent fatty acids.
(15) The oil and/or fat for chocolate according to (11), wherein the content of lauric acid is 13 wt.% or less among all constituent fatty acids.
(16) The oil and/or fat for chocolate according to (12), wherein the content of lauric acid is 13 wt.% or less among all constituent fatty acids.
(17) Chocolate made by using from 0.2 to 15 wt.% of the oil and/or fat for chocolate according to (1) or (10) to (16).
(18) A bloom inhibitor, containing the oil and/or fat for chocolate according to (1) or (10) to (16).
(19) A method for producing an oil and/or fat for chocolate, the oil and/or fat satisfying all requirements (a) to (e) set forth below, the method being characterized by including removing, by fractionation, a high melting point fraction from an interesterified oil having lauric acid content of 25 wt.% or less in constituent fatty acids and a ratio of palmitic acid content/stearic acid content of from 1.5 to 5;
   (a) the content of trans fatty acids is 5 wt.% or less among all constituent fatty acids;
   (b) the content of saturated fatty acids having a chain length of 16 or more carbons is from 20 to 60 wt.% among all constituent fatty acids;
   (c) the content of CN38 to CN46 triglycerides is 40 wt.% or less among all triglycerides;
   (d) the content of SO2 triglycerides is 40 wt.% or less among all triglycerides; and
   (e) the content of S2O triglycerides is from 10 to 40 wt.% among all triglycerides.
   It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.
(20) The method for producing an oil and/or fat for chocolate according to (19), wherein the oil and/or fat further satisfies requirements (c2), (d2), and (f) set forth below:
   (c2) the content of CN38 to CN46 triglycerides is from 10 to 35 wt.% among all triglycerides;
   (d2) the content of SO2 triglycerides is 30 wt.% or less among all triglycerides; and
   (f) the content of lauric acid is from 1 to 13 wt.% among all constituent fatty acids.
(21) The method for producing an oil and/or fat for chocolate according to (19), wherein the oil and/or fat further satisfies requirement (g) set forth below:
   (g) SFC at 10°C is from 5 to 40%.
(22) A method for suppressing blooming and/or graining of soft chocolate by blending an oil and/or fat for chocolate satisfying all requirements (a) to (e) set forth below:
   (a) the content of trans fatty acids is 5 wt.% or less among all constituent fatty acids;
   (b) the content of saturated fatty acids having a chain length of 16 or more carbons is from 20 to 60 wt.% among all constituent fatty acids;
   (c) the content of CN38 to CN46 triglycerides is 40 wt.% or less among all triglycerides;
   (d) the content of SO2 triglycerides is 40 wt.% or less among all triglycerides; and
   (e) the content of S2O triglycerides is from 10 to 40 wt.% among all triglycerides.
   It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.
(23) The method according to (22), wherein the oil and/or fat further satisfies requirements (c2), (d2), and (f) set forth below:
   (c2) the content of CN38 to CN46 triglycerides is from 10 to 35 wt.% among all triglycerides;
   (d2) the content of SO2 triglycerides is 30 wt.% or less among all triglycerides; and
   (f) the content of lauric acid is from 1 to 13 wt.% among all constituent fatty acids.
(24) A method for suppressing bloom development in tempering-type chocolate by blending an oil and/or fat for chocolate satisfying all requirements (a) to (e) set forth below:
   (a) the content of trans fatty acids is 5 wt.% or less among all constituent fatty acids;
   (b) the content of saturated fatty acids having a chain length of 16 or more carbons is from 20 to 60 wt.% among all constituent fatty acids;
   (c) the content of CN38 to CN46 triglycerides is 40 wt.% or less among all triglycerides;
   (d) the content of SO2 triglycerides is 40 wt.% or less among all triglycerides; and
   (e) the content of S2O triglycerides is from 10 to 40 wt.% among all triglycerides.
   It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.
(25) The method according to (24), wherein the oil and/or fat further satisfies requirement (g) set forth below:
   (g) SFC at 10°C is from 5 to 40%.

In other words, the present invention includes the following inventions.

(31) An oil and/or fat for chocolate, satisfying all requirements (a) to (f) set forth below:
(a) the content of trans fatty acids is 5 wt.% or less among all constituent fatty acids;
(b) the content of lauric acid is from 1 to 13 wt.% among all constituent fatty acids;
(c) the content of saturated fatty acids having a chain length of 16 or more carbons is from 20 to 60 wt.% among all constituent fatty acids;
(d) the content of CN38 to CN46 triglycerides is from 10 to 35 wt.% among all triglycerides;
(e) the content of SO2 triglycerides is 30 wt.% or less among all triglycerides; and
(f) the content of S2O triglycerides is from 10 to 40 wt.% among all triglycerides.

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

(32) The oil and/or fat for chocolate according to (31), wherein the content of unsaturated fatty acids is from 35 to 58 wt.% among all constituent fatty acids.

(33) The oil and/or fat for chocolate according to (31), satisfying all requirements for SFC% set forth below:
· SFC at 0°C is from 10 to 60%;
· SFC at 5°C is from 5 to 50%;
· SFC at 10°C is 40% or less; and
· SFC at 20°C is 9% or less.

(34) The oil and/or fat for chocolate according to (32), satisfying all requirements for SFC% set forth below:
· SFC at 0°C is from 10 to 60%;
· SFC at 5°C is from 5 to 50%;
· SFC at 10°C is 40% or less; and
· SFC at 20°C is 9% or less.

(35) Chocolate made by using from 5 to 65 wt.% of the oil and/or fat for chocolate according to (31) to (34).

(36) A method for producing an oil and/or fat for chocolate, the oil and/or fat satisfying all requirements (a) to (f) set forth below, the method is characterized by including removing, by fractionation, a high melting point fraction from an interesterified oil having lauric acid content of from 1 to 25 wt.% in constituent fatty acids and a ratio of palmitic acid content/stearic acid content of from 1.5 to 5;
(a) the content of trans fatty acids is 5 wt.% or less among all constituent fatty acids;
(b) the content of lauric acid is from 1 to 13 wt.% among all constituent fatty acids;
(c) the content of saturated fatty acids having a chain length of 16 or more carbons is from 20 to 60 wt.% among all constituent fatty acids;
(d) the content of CN38 to CN46 triglycerides is from 10 to 35 wt.% among all triglycerides;
(e) the content of SO2 triglycerides is 30 wt.% or less among all triglycerides; and
(f) the content of S2O triglycerides is from 10 to 40 wt.% among all triglycerides.

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

(37) A method for suppressing blooming and/or graining of soft chocolate by blending an oil and/or fat for chocolate satisfying all requirements (a) to (f) set forth below:
(a) the content of trans fatty acids is 5 wt.% or less among all constituent fatty acids;
(b) the content of lauric acid is from 1 to 13 wt.% among all constituent fatty acids;
(c) the content of saturated fatty acids having a chain length of 16 or more carbons is from 20 to 60 wt.% among all constituent fatty acids;
(d) the content of CN38 to CN46 triglycerides is from 10 to 35 wt.% among all triglycerides;
(e) the content of SO2 triglycerides is 30 wt.% or less among all triglycerides; and
(f) the content of S2O triglycerides is from 10 to 40 wt.% among all triglycerides.

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

(41) An oil and/or fat for chocolate, satisfying all requirements (a) to (f) set forth below:
(a) the content of trans fatty acids is 5 wt.% or less among all constituent fatty acids;
(b) the content of saturated fatty acids having a chain length of 16 or more carbons is from 20 to 60 wt.% among all constituent fatty acids;
(c) the content of CN38 to CN46 triglycerides is 40 wt.% or less among all triglycerides;
(d) the content of SO2 triglycerides is 40 wt.% or less among all triglycerides;
(e) the content of S2O triglycerides is from 10 to 40 wt.% among all triglycerides; and
(f) SFC at 10°C is from 5 to 40%.

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

(42) The oil and/or fat for chocolate according to (41), wherein the ratio of palmitic acid content/stearic acid content is 7 or less in constituent fatty acid composition.

(43) The oil and/or fat for chocolate according to (41), wherein the content of lauric acid is 13 wt.% or less among all constituent fatty acids.

(44) The oil and/or fat for chocolate according to (42), wherein the content of lauric acid is 13 wt.% or less among all constituent fatty acids.

(45) The oil and/or fat for chocolate according to (41), satisfying all requirements for SFC% set forth below:
· SFC at 0°C is from 10 to 60%;
· SFC at 5°C is from 5 to 50%; and
· SFC at 20°C is 9% or less.

(46) The oil and/or fat for chocolate according to (42), satisfying all requirements for SFC% set forth below:
· SFC at 0°C is from 10 to 60%;
· SFC at 5°C is from 5 to 50%; and
· SFC at 20°C is 9% or less.

(47) The oil and/or fat for chocolate according to (43), satisfying all requirements for SFC% set forth below:
· SFC at 0°C is from 10 to 60%;
· SFC at 5°C is from 5 to 50%; and
· SFC at 20°C is 9% or less.

(48) The oil and/or fat for chocolate according to (44), satisfying all requirements for SFC% set forth below:
· SFC at 0°C is from 10 to 60%;
· SFC at 5°C is from 5 to 50%; and
· SFC at 20°C is 9% or less.

(49) Chocolate made by using from 0.2 to 15 wt.% of the oil and/or fat for chocolate according to (41) to (48).

(50) A bloom inhibitor using the oil and/or fat for chocolate according to (41) to (48).

(51) A method for producing an oil and/or fat for chocolate, the oil and/or fat satisfying all requirements (a) to (f) set forth below, the method is characterized by including removing, by fractionation, a high melting point fraction from an interesterified oil having lauric acid content of 25 wt.% or less in constituent fatty acids and a ratio of palmitic acid content/stearic acid content of from 1.5 to 5;
(a) the content of trans fatty acids is 5 wt.% or less among all constituent fatty acids;
(b) the content of saturated fatty acids having a chain length of 16 or more carbons is from 20 to 60 wt.% among all constituent fatty acids;
(c) the content of CN38 to CN46 triglycerides is 40 wt.% or less among all triglycerides;
(d) the content of SO2 triglycerides is 40 wt.% or less among all triglycerides;
(e) the content of S2O triglycerides is from 10 to 40 wt.% among all triglycerides; and
(f) SFC at 10°C is from 5 to 40%.

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

(52) A method for suppressing bloom development in tempering-type chocolate by blending an oil and/or fat for chocolate satisfying all requirements (a) to (f) set forth below:
(a) the content of trans fatty acids is 5 wt.% or less among all constituent fatty acids;
(b) the content of saturated fatty acids having a chain length of 16 or more carbons is from 20 to 60 wt.% among all constituent fatty acids;
(c) the content of CN38 to CN46 triglycerides is 40 wt.% or less among all triglycerides;
(d) the content of SO2 triglycerides is 40 wt.% or less among all triglycerides;
(e) the content of S20 triglycerides is from 10 to 40 wt.% among all triglycerides; and
(f) SFC at 10°C is from 5 to 40%.

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

### Advantageous Effects of Invention

According to the present invention, an oil and/or fat that suppresses the occurrence of blooming and/or graining in chocolate can be provided. In particular, an oil and/or fat that suppresses the occurrence of blooming and/or graining particularly in soft chocolate can be provided.

In addition, according to the present invention, an oil and/or fat that is capable of suppressing the occurrence of blooming in chocolate without adversely affecting a melting texture in the mouth can be provided.

### Description of Embodiments

Hereinafter, the present invention will be described in detail.

The present invention relates to an oil and/or fat for chocolate satisfying all of the requirements (a) to (e) set forth below.
(a) The content of trans fatty acids is 5 wt.% or less among all constituent fatty acids;
(b) The content of saturated fatty acids having a chain length of 16 or more carbons is from 20 to 60 wt.% among all constituent fatty acids;
(c) The content of CN38 to CN46 triglycerides is 40 wt.% or less among all triglycerides;
(d) The content of SO2 triglycerides is 40 wt.% or less among all triglycerides; and
(e) The content of S2O triglycerides is from 10 to 40 wt.% among all triglycerides,

It should be noted that "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

When all of the foregoing (a) to (e) are appropriately within the ranges set forth above, the effect of the present invention can be produced.

As for the oil and/or fat for chocolate of the present invention, the content of trans fatty acids needs to be 5 wt.% or less among all constituent fatty acids. The content of trans fatty acids is preferably 4 wt.% or less, more preferably 3 wt.% or less, and still more preferably 2 wt.% or less.

Note that, the term low trans used in the present invention is intended to mean that any oil and/or fat that contains a trans acid, such as a hydrogenated oil (excluding fully hydrogenated oils), is not used substantially as a raw material. The term, an oil and/or fat that contains a trans acid, refers to an oil and/or fat in which the content of trans fatty acids is more than 2 wt.% among all constituent fatty acids. The phrase, any oil and/or fat that contains a trans acid is not used substantially as a raw material, means that the content of the oil and/or fat that contains a trans acid is 2 wt.% or less, preferably 1 wt.% or less, and more preferably 0.5 wt.% or less in the raw material.

As for the oil and/or fat for chocolate of the present invention, the content of saturated fatty acids having a chain length of 16 or more carbons needs to be from 20 to 60 wt.% among all constituent fatty acids. The lower limit of the content is preferably 25 wt.% or more, more preferably 30 wt.% or more, and still more preferably 35 wt.% or more. Meanwhile, the upper limit of the content is preferably 55 wt.% or less, more preferably 50 wt.% or less, and still more preferably 45 wt.% or less.

As for the oil and/or fat for chocolate of the present invention, the content of CN38 to CN46 triglyceride (which represents a triglyceride in which the total number of carbons of the constituent fatty acid of the triglyceride in the oil and/or fat is from 38 to 46) needs to be 40 wt.% or less among all triglycerides. The lower limit of the content is preferably 0.5 wt.% or more, more preferably 1 wt.% or more, still more preferably 4 wt.% or more, 7 wt.% or more, 10 wt.% or more, 11 wt.% or more, or 12 wt.% or more, and most preferably 13 wt.% or more. Meanwhile, the upper limit of the content is preferably 35 wt.% or less, more preferably 33 wt.% or less, still more preferably 32 wt.% or less, 30 wt.% or less, and most preferably 28 wt.% or less.

As for the oil and/or fat for chocolate of the present invention, the content of SO2 triglyceride (which refers to a triglyceride in which one molecule of S (saturated fatty acid having from 16 to 20 carbons) and two molecules of O (oleic acid) are bonded) needs to be 40 wt.% or less among all triglycerides. The lower limit of the content is preferably 5 wt.% or more, more preferably 10 wt.% or more, and still more preferably 15 wt.% or more. Meanwhile, the upper limit of the content is preferably 38 wt.% or less, more preferably 36 wt.% or less, still more preferably 35 wt.% or less, 32 wt.% or less, 30 wt.% or less, 28 wt.% or less, 26 wt.% or less, and most preferably 25 wt.% or less.

As for the oil and/or fat for chocolate of the present invention, the content of S2O triglyceride (which refers to a triglyceride in which two molecules of S (saturated fatty acid having from 16 to 20 carbons) and one molecule of O (oleic acid) are bonded) needs to be from 10 to 40 wt.% among all triglycerides. The lower limit of the content is preferably 13 wt.% or more, more preferably 15 wt.% or more, and still more preferably 17 wt.% or more. Meanwhile, the upper limit of the content is preferably 37 wt.% or less, more preferably 35 wt.% or less, and still more preferably 33 wt.% or less.

As for the oil and/or fat for chocolate of the present invention, the content of lauric acid is preferably 13 wt.% or less among all constituent fatty acids. The lower limit of the content is not particularly limited, but can be, for example, 1 wt.% or more, 2 wt.% or more, or 3 wt.% or more. Meanwhile, the upper limit of the content is more preferably 12 wt.% or less, still more preferably 11 wt.% or less, and most preferably 10 wt.% or less.

As for the oil and/or fat for chocolate of the present invention, the content of PO2 triglyceride (which represents a triglyceride in which one molecule of P (palmitic acid) and two molecules of O (oleic acid) are bonded) is preferably 35 wt.% or less among all triglycerides. The lower limit of the content is more preferably 5 wt.% or more, still more preferably 10 wt.% or more, and most preferably 15 wt.% or more. Meanwhile, the upper limit of the content is more preferably 30 wt.% or less, still more preferably 25 wt.% or less, 24 wt.% or less, 22 wt.% or less, and most preferably 20 wt.% or less.

With the content being appropriately within this range, the effects of the present invention can be further produced.

As for the oil and/or fat for chocolate of the present invention, the content of StO2 triglyceride (which represents a triglyceride in which one molecule of St (stearic acid) and two molecules of O (oleic acid) are bonded) is preferably 10 wt.% or less among all triglycerides. The lower limit of the content is more preferably 1 wt.% or more, still more preferably 2 wt.% or more, and most preferably 3 wt.% or more. Meanwhile, the upper limit of the content is more preferably 9 wt.% or less, still more preferably 8 wt.% or less, and most preferably 7 wt.% or less.

With the content being appropriately within this range, the effects of the present invention can be further produced.

As for the oil and/or fat for chocolate of the present invention, the content of P2O triglyceride (which represents a triglyceride in which two molecules of P (palmitic acid) and one molecule of O (oleic acid) are bonded) is preferably 30 wt.% or less among all triglycerides. The lower limit of the content is more preferably 3 wt.% or more, still more preferably 5 wt.% or more, and most preferably 10 wt.% or more. Meanwhile, the upper limit of the content is more preferably 27 wt.% or less, still more preferably 25 wt.% or less, and most preferably 23 wt.% or less.

With the content being appropriately within this range, the effects of the present invention can be further produced.

As for the oil and/or fat for chocolate of the present invention, the content of PStO triglyceride (which represents a triglyceride in which one molecule of P (palmitic acid), one molecule of St (stearic acid), and one molecule of O (oleic acid) are bonded) is preferably 13 wt.% or less among all triglycerides. The lower limit of the content is more preferably 2 wt.% or more, still more preferably 4 wt.% or more, and most preferably 6 wt.% or more. Meanwhile, the upper limit of the content is more preferably 12 wt.% or less, still more preferably 11 wt.% or less, and most preferably 10 wt.% or less.

With the content being appropriately within this range, the effects of the present invention can be further produced.

As for the oil and/or fat for chocolate of the present invention, the content of St2O triglyceride (which represents a triglyceride in which two molecules of St (stearic acid) and one molecule of O (oleic acid) are bonded) is preferably 10 wt.% or less among all triglycerides. The lower limit of the content is more preferably 0.3 wt.% or more, still more preferably 0.5 wt.% or more, and most preferably 0.7 wt.% or more. Meanwhile, the upper limit of the content is more preferably 7 wt.% or less, still more preferably 5 wt.% or less, and most preferably 3 wt.% or less.

With the content being appropriately within this range, the effects of the present invention can be further produced. In particular, in the second embodiment, an adverse effect on a melting texture in the mouth can be further suppressed.

As for the oil and/or fat for chocolate of the present invention, the content of SSS (which represents a triglyceride in which three molecules of S (a saturated fatty acid having from 16 to 20 carbons) are bonded) is preferably 2 wt.% or less among all triglycerides. The lower limit of the content is more preferably 0.1 wt.% or more. Meanwhile, the upper limit of the content is more preferably 1.5 wt.% or less, still more preferably 1 wt.% or less, and most preferably 0.5 wt.% or less.

With the content being appropriately within this range, the effects of the present invention can be further produced. In particular, in the second embodiment, an adverse effect on a melting texture in the mouth can be further suppressed.

As for the oil and/or fat for chocolate of the present invention, the proportion of unsaturated fatty acids is preferably 35 wt.% or more among all constituent fatty acids. The lower limit is more preferably 37 wt.% or more, still more preferably 40 wt.% or more, and most preferably 43 wt.% or more. Meanwhile, the upper limit is more preferably 65 wt.% or less, still more preferably 62 wt.% or less, 59 wt.% or less, 58 wt.% or less, 56 wt.% or less, 54 wt.% or less, and most preferably 52 wt.% or less.

The lower limit and upper limit being appropriately within this range is superior in terms of capability of suppressing the occurrence of blooming and/or graining in chocolate, particularly in the first embodiment. In particular, in the second embodiment, the lower limit and upper limit being appropriately within this range is superior in terms of capability of reducing a solid fat content by the presence of unsaturated fatty acids.

As for the oil and/or fat for chocolate of the present invention, the proportion of the content of SSO triglycerides to the content of S2O triglycerides is preferably 40 wt.% or more. The lower limit is more preferably 50 wt.% or more, still more preferably 60 wt.% or more.

It should be noted that the S2O triglyceride refers to a triglyceride in which two molecules of saturated fatty acids (S) having from 16 to 20 carbons and one molecule of oleic acid (O) are bonded, and the SSO triglyceride refers to a triglyceride in which fatty acids bonded to the first and second positions in the triglyceride each are a saturated fatty acid (S) having from 16 to 20 carbons and a fatty acid bonded to the third position is oleic acid (O), and a triglyceride in which fatty acids bonded to the second and third positions in the triglyceride each are a saturated fatty acid (S) each having from 16 to 20 carbons and a fatty acid bonded to the first position is oleic acid (O).

With the content being appropriately within this range, the effects of the present invention can be further produced.

As for the oil and/or fat for chocolate of the present invention, the proportion of the content of OSO triglyceride to the content of SO2 triglyceride is preferably 20 wt.% or more. The lower limit is more preferably 25 wt.% or more, still more preferably 30 wt.% or more. The upper limit is more preferably 60 wt.% or less, still more preferably 50 wt.% or less, and most preferably 40 wt.% or less.

It should be noted that the SO2 triglyceride refers to a triglyceride in which one molecule of saturated fatty acid (S) having from 16 to 20 carbons and two molecules of oleic acid (O) are bonded, and the OSO triglyceride refers to a triglyceride in which the fatty acids bonded to the first and third positions in the triglyceride each are oleic acid (O), and the fatty acid bonded to the second position is a saturated fatty acid (S) having from 16 to 20 carbons.

With the content being appropriately within this range, the effects of the present invention can be further produced.

As for the oil and/or fat for chocolate of the present invention, the ratio of the content of SO2 triglyceride to the content of S2O triglyceride is preferably 2.4 or less. In particular, the lower limit of the ratio in the first embodiment is more preferably 0.5 or more, still more preferably 0.6 or more, and most preferably 0.7 or more, and likewise, the upper limit of the ratio is more preferably 2 or less, and still more preferably 1.5 or less.

With the content being appropriately within this range, the effects of the present invention can be further produced.

As for the oil and/or fat for chocolate of the present invention, particularly in the first embodiment, the content of stearic acid is preferably 5 wt.% or more among all constituent fatty acids. The lower limit of the content is more preferably 6 wt.% or more, still more preferably 7 wt.% or more, and most preferably 8 wt.% or more. Meanwhile, the upper limit of the content is more preferably 15 wt.% or less, still more preferably 13 wt.% or less, and most preferably 11 wt.% or less.

With the content being appropriately within this range, the effects of the present invention can be further produced.

As for the oil and/or fat for chocolate of the present invention, particularly in the second embodiment, the ratio of the content of palmitic acid/the content of stearic acid is preferably 7 or less in constituent fatty acid composition. The lower limit of the ratio is more preferably 1 or more, still more preferably 2 or more, and most preferably 3 or more. Meanwhile, the upper limit of the ratio is more preferably 6 or less, still more preferably 5 or less, and most preferably 4.5 or less.

The ratio being appropriately within this range is superior in terms of the effect of suppressing blooming particularly in the second embodiment.

As for the oil and/or fat for chocolate of the present invention, SFC at 0°C is preferably from 10 to 60%. The lower limit of the SFC at 0°C is more preferably 15% or more, still more preferably 20% or more, 25% or more, and most preferably 30% or more. Meanwhile, the upper limit of the SFC at 0°C is more preferably 55% or less, still more preferably 50% or less, 45% or less, and most preferably 40% or less.

The SFC at 0°C being appropriately within this range is superior in being able to provide a soft texture in chocolate particularly in the first embodiment and reduce a solid fat content particularly in the second embodiment.

As for the oil and/or fat for chocolate of the present invention, SFC at 5°C is preferably from 5 to 50%. The lower limit of the SFC at 5°C is more preferably 10% or more, still more preferably 15% or more, and most preferably 20% or more. Meanwhile, the upper limit of the SFC at 5°C is more preferably 45% or less, still more preferably 40% or less, and most preferably 35% or less.

The SFC at 5°C being appropriately within this range is superior in being able to provide a soft texture in chocolate particularly in the first embodiment and reduce a solid fat content particularly in the second embodiment.

As for the oil and/or fat for chocolate of the present invention, SFC at 10°C is preferably 40% or less particularly in the first embodiment. The lower limit thereof is more preferably 3% or more, still more preferably 5% or more, 6% or more, 8% or more, and most preferably 10% or more. Meanwhile, the upper limit thereof is more preferably 35% or less, still more preferably 30% or less, and most preferably 25% or less.

The SFC at 10°C being appropriately within this range is superior in terms of capability of providing a soft texture in chocolate particularly in the first embodiment.

As for the oil and/or fat for chocolate of the present invention, SFC at 10°C is preferably from 5 to 40% particularly in the second embodiment. The lower limit thereof is more preferably 6% or more, still more preferably 8% or more, and most preferably 10% or more. Meanwhile, the upper limit thereof is more preferably 35% or less, still more preferably 30% or less, and most preferably 25% or less.

The SFC at 10°C being appropriately within this range is superior in being able to reduce a solid fat content particularly in the second embodiment.

As for the oil and/or fat for chocolate of the present invention, SFC at 15°C is preferably 20% or less. The lower limit of the SFC at 15°C is more preferably 2% or more, still more preferably 4% or more, and most preferably 5% or more. Meanwhile, the upper limit of the SFC at 15°C is more preferably 18% or less, still more preferably 15% or less, 13% or less, and most preferably 10% or less.

The SFC at 15°C being appropriately within this range is superior in being able to provide a soft texture in chocolate particularly in the first embodiment and reduce a solid fat content particularly in the second embodiment.

As for the oil and/or fat for chocolate of the present invention, SFC at 20°C is preferably 9% or less. The upper limit of the SFC at 20°C is more preferably 6% or less, still more preferably 3% or less, 2% or less, and most preferably 1% or less.

The SFC at 20°C being appropriately within this range is superior in being able to provide a soft texture in chocolate particularly in the first embodiment and reduce a solid fat content particularly in the second embodiment.

As for the oil and/or fat for chocolate of the present invention, SFC at 25°C is preferably 3% or less. The upper limit of the SFC at 25°C is more preferably 2% or less, still more preferably 1% or less, and most preferably 0.5% or less.

The SFC at 25°C being appropriately within this range is superior in being able to provide a soft texture in chocolate particularly in the first embodiment and reduce a solid fat content particularly in the second embodiment.

The oil and/or fat for chocolate of the present invention can be obtained as oil and/or fat of a low melting point fraction, for example, by randomly interesterifying a raw material oil and/or fat mixture and then performing a fractionation operation. For such a fractionation operation method, a method, such as solvent fractionation or non-solvent fractionation, can be selected. Alternatively, the oil and/or fat for chocolate of the present invention can also be obtained by preparing a plurality of the oil and/or fat of low melting point fractions and mixing them.

As used herein, specific examples of the raw material oil and/or fat include: plant oil and/or fat, such as palm oil, rapeseed oil, high erucic acid rapeseed oil, sunflower oil, high-oleic sunflower oil, soybean oil, rice oil, corn oil, cottonseed oil, peanut oil, carthamus tinctorius seed oil, safflower oil, olive oil, sesame oil, linseed oil, palm kernel oil, coconut oil, medium-chain fatty acid triglycerides (MCT), shea butter and sal fat; animal oil and/or fat, such as milk fat, beef tallow, lard, fish oil, and whale oil; algal oil, oil and/or fat derived from microbial fermentation; and their hydrogenated oil, fractionated oil, hydrogenated fractionated oil, fractionated hydrogenated oil, and processed oil and/or fat underwent interesterification or the like; and furthermore mixed oil and/or fat thereof.

In particular, one or more of palm oil, palm kernel oil, and high-oleic sunflower oil can be suitably used as essential raw oils and/or fats.

Note that, when high-oleic sunflower oil is used, the content of oleic acid contained therein is preferably 60 wt.% or more in constituent fatty acid composition.

When the oil and/or fat for chocolate of the present invention is obtained as a fractionated low melting point fraction after interesterification, the interesterified oil preferably has a content of lauric acid of 25 wt.% or less. The lower limit of the content is not particularly limited, but is more preferably 1 wt.% or more, and still more preferably 2 wt.% or more. Meanwhile, the upper limit of the content is more preferably 20 wt.% or less. As for the interesterified oil, the ratio of the content of palmitic acid/the content of stearic acid is preferably from 1.5 to 5. The lower limit of the ratio is more preferably 2 or more. Meanwhile, the upper limit of the ratio is more preferably 4 or less.

The method of the random interesterification may be a method using a chemical catalyst or a method by an enzyme catalyst. As the chemical catalyst, for example, an alkali metal catalyst such as sodium methylate can be used, and examples of the enzyme catalyst include lipases such as those from Alcaligenes, Penicillium, and Thermomyces. These lipases may be used after being immobilized on an ion-exchange resin, diatomaceous earth, or the like by a known method, or may be used in the form of a powder.

The oil and/or fat for chocolate of the present invention can be combined with oil and/or fat derived from a cacao component and/or a milk component, hard butter, and another oil and/or fat component, besides the oil and/or fat for chocolate of the present invention, and the blending amounts are appropriately adjusted, and thus the oil and/or fat for chocolate of the present invention can be used as oil and/or fat for chocolate suitable for various applications.

To the oil and/or fat for chocolate according to the present invention, an optional component used in the application for typical chocolate can be appropriately added, such as a colorant, an emulsifier, an antioxidant, or a flavoring agent. These optional components are added in an amount of 20 wt.% or less and preferably 10 wt.% or less relative to the oil and/or fat for chocolate according to the present invention.

In addition, examples of the emulsifier include a glycerol fatty acid ester, a sucrose fatty acid ester, a sorbitan fatty acid ester, a glycerol organic acid fatty acid ester, a polyglycerol fatty acid ester, and lecithin.

The term "chocolate" according to the present invention is not limited to chocolate, quasi chocolate and chocolate-utilizing food defined by the Japan National Chocolate Industry Fair Trade Council and the Japan Fair Trade Council of Chocolate-Utilizing Foods, but also entails oil and/or fat-processed food which contains oil and/or fat as an essential component and is produced by using cocoa mass, cocoa, cacao butter, cocoa butter alternative, hard butter or the like.

As a preferred aspect in the first embodiment, the chocolate according to the present invention is preferably soft chocolate. The soft chocolate refers to chocolate that does not have good snap properties, which are required for common chocolate, but has plasticity at room temperature.

As a preferred aspect in the second embodiment, the chocolate using the oil and/or fat for chocolate of the present invention is preferably a tempering-type chocolate.

In the first embodiment, the oil and/or fat for chocolate of the present invention is preferably used in an amount of from 5 to 65 wt.% relative to the total amount of the whole chocolate. The lower limit of the amount of use is more preferably 10 wt.% or more, still more preferably 15 wt.%. Meanwhile, the upper limit of the amount of use is more preferably 60 wt.% or less, still more preferably 50 wt.% or less.

In the second embodiment, the oil and/or fat for chocolate of the present invention is preferably used in an amount of from 0.2 to 15 wt.% relative to the total amount of whole chocolate. The lower limit of the amount of use is more preferably 0.5 wt.% or more, still more preferably 1 wt.% or more. Meanwhile, the upper limit of the amount of use is more preferably 12 wt.% or less, still more preferably 10 wt.% or less, and most preferably 8 wt.% or less.

The chocolate according to the present invention can be produced in the same manner as in producing a common chocolate. As an example, oil and/or fat, sugars, cocoa mass, cocoa butter, cocoa powder, and various powder foods such as powdered milk, emulsifiers, antioxidants, flavors, and pigments are used as raw materials, and the production method includes mixing, refining (roll-refining), polishing (conching process), cooling, and the like. To give another example, raw materials same as those listed above are used, and the method includes mixing, refining (refining with ball mill or bead mill), stirring, cooling, and the like.

The mechanism of obtaining high bloom resistance and/or graining resistance in the chocolate using the oil and/or fat for chocolate of the present invention, particularly in the first embodiment, is supposedly believed to be due to the suppression of the crystal transition from the β'-form to the β-form over time of the oil content in the chocolate.

More specifically, there can be also thought a case of suppressing the crystal transition of the solid fat component of the oil and/or fat itself for chocolate contained in the chocolate according to the present invention. Alternatively, there can be also thought another case of suppressing the crystal transition of solid fat, other than the oil and/or fat for chocolate, contained in the chocolate according to the present invention.

The mechanism for obtaining high bloom resistance in the chocolate using the oil and/or fat for chocolate of the present invention, particularly in the second embodiment, is supposedly believed to be due to that, even if the crystals in the chocolate are the stable V-type crystals (V represents Roman numeral 5. the same applies hereinafter) immediately after the tempering operation, the crystal transition to the VI-type (VI represents Roman numeral 6. the same applies hereinafter) may take place due to the influence of thermal history such as temperature cycles, but the occurrence of this phenomenon is suppressed by the inclusion of the oil component containing specific composition in the chocolate.

The bloom inhibitor of the present invention uses the above-described oil and/or fat for chocolate of the present invention. A bloom inhibitor containing the oil and/or fat for chocolate is blended into chocolate and thereby suppressing the occurrence of blooming.

The present invention can also be understood as a method for suppressing blooming and/or graining in soft chocolate by using oil and/or fat for chocolate satisfying all of the requirements (a) to (e) set forth above. Specifically, an oil and/or fat for chocolate, in which (a) the content of trans fatty acids is 5 wt.% or less among all constituent fatty acids, (b) the content of saturated fatty acids having a chain length of 16 or more carbons is from 20 to 60 wt.% among all constituent fatty acids, (c) the content of CN38 to CN46 triglycerides is 40 wt.% or less among all triglycerides, (d) the content of SO2 triglycerides is 40 wt.% or less among all triglycerides, and (e) the content of S2O triglycerides is from 10 to 40 wt.% among all triglycerides, is blended into soft chocolate, and thereby suppressing blooming and/or graining of the soft chocolate.

Furthermore, when the requirements (c2), (d2), and (f) set forth below are satisfied in addition to the requirements (a) to (e) set forth above, blooming and/or graining in soft chocolate can be further suppressed.
(c2) The content of CN38 to CN46 triglycerides is from 10 to 35 wt.% among all triglycerides;
(d2) The content of SO2 triglycerides is 30 wt.% or less among all triglycerides; and
(f) The content of lauric acid is from 1 to 13 wt.% among all constituent fatty acids.

The present invention can also be understood as a method for suppressing the bloom development in a tempering-type chocolate by using an oil and/or fat for chocolate satisfying all of the requirements (a) to (e) set forth above. Specifically, an oil and/or fat for chocolate, in which (a) the content of trans fatty acids is 5 wt.% or less among all constituent fatty acids, (b) the content of saturated fatty acids having a chain length of 16 or more carbons is from 20 to 60 wt.% among all constituent fatty acids, (c) the content of CN38 to CN46 triglycerides is 40 wt.% or less among all triglycerides, (d) the content of SO2 triglycerides is 40 wt.% or less among all triglycerides, and (e) the content of S2O triglycerides is from 10 to 40 wt.% among all triglycerides, is blended into tempering-type chocolate, and thereby suppressing the bloom development in the tempering-type chocolate.

Furthermore, when the following requirement (g) is satisfied in addition to the requirements (a) to (e) set forth above, the bloom development in tempering-type chocolate can be further suppressed.
(g) SFC at 10°C is from 5 to 40%.

### Examples

Hereinafter, the present invention will be described in more detail with reference to examples of the present invention, but the spirit of the present invention is not limited to the following examples. In the examples, values in %, parts, and proportions are all on a weight basis.

### Method for Measuring Fatty Acid Composition

The constituent fatty acid composition of the oil and/or fat was determined by Standard Methods for Analysis of Fats, Oils and Related Materials 2.4.2.1-2013.

### Measurement Method of Triglyceride Composition (the total number of carbons)

The triglyceride composition (the total number of carbons) of the oil and/or fat was measured in accordance with 2.4.6 Triacylglycerol Composition (gas chromatography) in Standard Methods for Analysis of Fats, Oils and Related Materials established by Japan Oil Chemists' Society.

### Measurement method of triglyceride composition (molecular species)

The triglyceride composition (molecular species) of the oil and/or fat was measured by high-performance liquid chromatography in accordance with Standard Methods for Analysis of Fats, Oils and Related Materials 2.4.6.2-2013. The measurement was conducted under the conditions of (column; ODS, eluent; acetone/acetonitrile = 80/20, liquid volume; 0.9 ml/min, column temperature; 25°C, detector; differential refractometer). The molecular species of each peak were identified based on the measurement results of a known POP concentrate or StOSt concentrate, which contains no lauric acid.

### (Method for measuring SFC)

The analyzer used was "minispec mq20" available from Bruker Corporation. SFC measurement was performed as follows based on IUPAC2.150a (Solid Content Determination in Fats by NMR).
1. An oil and/or fat sample is melted at 80°C.
2. From 2.7 to 3.3 g of the oil and/or fat is dispensed into a measurement test tube having a length of 180 mm and a diameter of 10 mm.
3. The filled measurement test tube is then held in a water bath at 0°C for 60 minutes.
4. The filled measurement test tube was held in the water bath set at each temperature for 30 minutes.
5. The SFC is measured using the "minispec pc120 SFC Analyzer" available from Bruker Corporation.

### <<First Embodiment>>

A first embodiment of the present invention will be specifically described with reference to Examples.

### <Example 1-1>

Raw material oil (the content of lauric acid in the raw material oil: 5.0 wt.%, the ratio of palmitic acid content/stearic acid content: 3.1) composed of 66.5 wt.% of palm fractionated high melting point fraction (iodine value: 31), 13.5 wt.% of fully hydrogenated palm oil, 11.2 wt.% of palm kernel oil, 5.8 wt.% of fully hydrogenated rapeseed oil, 1.8 wt.% of high-oleic sunflower oil and 1.2 wt.% of palm oil, was randomly interesterified using sodium methylate, the resultant interesterified oil and/or fat was subjected to hexane fractionation and thereby removing its high melting point fraction, and the resultant fractionated low-melting point fraction was decolored and deodorized by a common method to obtain Example 1-1.

### <Example 1-2>

Example 1-2 was obtained in the same manner as in Example 1-1 except that raw material oil (the content of lauric acid in raw material oil: 3.1 wt.%, the ratio of palmitic acid content/stearic acid content: 3.0) composed of 40 wt.% of palm fractionated high melting point fraction (iodine value: 31), 28 wt.% of palm oil, 25 wt.% of fully hydrogenated palm oil, and 7 wt.% of palm kernel oil, was used as raw material oil for the randomly interesterified oil.

As other comparative examples, refined rapeseed oil (Comparative Example 1-1), palm super olein having an iodine value of 67 (Comparative Example 1-2), and palm kernel olein having an iodine value of 25 (Comparative Example 1-3) were used. All of them are available from Fuji Oil Co., Ltd.

The analysis values (fatty acid composition %, triglyceride composition (the total number of carbons) %, triglyceride composition (molecular species) %, SFC) of the oil and/or fat of each of Examples and Comparative Examples mentioned above are presented in the table below.

It should be noted that the triglyceride composition (molecular species) % is listed only for the main triglycerides. Note that Comparative Example 1-3 contains a certain amount or more of lauric acid (C12), and hence the analysis value is not listed from the viewpoint of the measurement accuracy.

**(Table 1-1) Analysis Values % of Fatty Acid Composition**

| | Example 1-1 | Example 1-2 | Comparative Example 1-1 | Comparative Example 1-2 | Comparative Example 1-3 |
|---|---|---|---|---|---|
| C6 | 0.1 | 0.1 | 0.0 | 0.0 | 0.0 |
| C8 | 1.5 | 0.8 | 0.0 | 0.0 | 3.7 |
| C10 | 1.0 | 0.6 | 0.0 | 0.0 | 3.3 |
| C12 | 8.1 | 4.8 | 0.0 | 0.2 | 42.4 |
| C14 | 2.6 | 1.9 | 0.0 | 1.0 | 13.1 |
| C16 | 29.8 | 31.7 | 3.9 | 32.2 | 8.9 |
| C16F1 | 0.1 | 0.1 | 0.4 | 0.4 | 0.0 |
| C18 | 8.7 | 9.2 | 1.7 | 3.0 | 2.6 |
| C18F1t | 0.2 | 0.1 | 0.0 | 0.1 | 0.3 |
| C18F1c | 39.5 | 40.5 | 64.0 | 49.3 | 22.1 |
| C 18F2t | 0.3 | 0.4 | 0.1 | 0.5 | 0.0 |
| C 18F2c | 7.9 | 9.5 | 18.8 | 12.6 | 3.4 |
| C18F3t | 0.0 | 0.0 | 0.9 | 0.1 | 0.1 |
| C18F3C | 0.0 | 0.1 | 8.3 | 0.2 | 0.0 |
| C20 | 0.2 | 0.2 | 1.6 | 0.3 | 0.1 |
| C22 | 0.0 | 0.0 | 0.3 | 0.1 | 0.0 |

**(Table 1-2) Analysis Values % of Triglyceride Composition (the total number of carbons)**

| | Example 1-1 | Example 1-2 | Comparative Example 1-1 | Comparative Example 1-2 | Comparative Example 1-3 |
|---|---|---|---|---|---|
| CN24 | 0.0 | 0.0 | 0.0 | 0.0 | 0.1 |
| CN26 | 0.0 | 0.0 | 0.0 | 0.0 | 0.6 |
| CN28 | 0.0 | 0.0 | 0.0 | 0.0 | 0.6 |
| CN30 | 0.4 | 0.2 | 0.0 | 0.0 | 1.7 |
| CN32 | 0.8 | 0.5 | 0.0 | 0.0 | 8.4 |
| CN34 | 0.8 | 0.4 | 0.0 | 0.7 | 10.1 |
| CN36 | 3.4 | 3.1 | 0.0 | 4.1 | 19.2 |
| CN38 | 2.6 | 2.3 | 0.0 | 3.2 | 12.4 |
| CN40 | 1.6 | 0.8 | 0.0 | 0.0 | 7.0 |
| CN42 | 3.5 | 1.9 | 0.0 | 0.0 | 9.2 |
| CN44 | 3.6 | 2.4 | 0.0 | 0.0 | 7.6 |
| CN46 | 11.8 | 8.0 | 0.0 | 0.1 | 6.5 |
| CN48 | 10.3 | 7.6 | 0.4 | 0.2 | 7.6 |
| CN50 | 19.9 | 24.0 | 0.7 | 23.6 | 3.1 |
| CN52 | 30.3 | 35.6 | 12.3 | 53.5 | 2.9 |
| CN54 | 10.7 | 12.9 | 81.8 | 14.3 | 2.7 |
| CN56 | 0.3 | 0.2 | 4.7 | 0.3 | 0.0 |

**(Table 1-3) Analysis Values % of Triglyceride Composition (molecular species)**

| | Example 1-1 | Example 1-2 | Comparative Example 1-1 | Comparative Example 1-2 |
|---|---|---|---|---|
| PO2 | 17.4 | 18.4 | 1.2 | 33.1 |
| P2O | 15.7 | 18.1 | 4.3 | 12.7 |
| PPP | 0.2 | 0.2 | 0.0 | 0.0 |
| StO2 | 4.7 | 5.2 | 0.2 | 3.8 |
| PStO | 6.7 | 8.3 | 0.2 | 1.5 |
| PPSt | 0.0 | 0.0 | 0.0 | 0.0 |
| St2O | 1.0 | 1.5 | 0.1 | 0.2 |
| PStSt | 0.0 | 0.0 | 0.0 | 0.0 |
| StStSt | 0.0 | 0.0 | 0.0 | 0.0 |
| SO2 | 22.1 | 23.6 | 1.4 | 36.9 |
| S2O | 23.4 | 27.9 | 4.6 | 14.4 |
| SSS | 0.2 | 0.2 | 0.0 | 0.0 |

**(Table 1-4) SFC Analysis Values**

| | Example 1-1 | Example 1-2 | Comparative Example 1-1 | Comparative Example 1-2 | Comparative Example 1-3 |
|---|---|---|---|---|---|
| 0°C | 37.3 | 35.5 | 0.0 | 3.1 | 70.7 |
| 5°C | 30.5 | 26.4 | 0.0 | 0.4 | 67.5 |
| 10°C | 18.7 | 19.1 | 0.0 | 0.2 | 57.1 |
| 15°C | 7.2 | 7.7 | 0.0 | 0.1 | 37.7 |
| 20°C | 0.3 | 0.2 | 0.0 | 0.0 | 15.9 |
| 25°C | 0.0 | -0.1 | 0.0 | 0.0 | 0.3 |

Examples and Comparative examples set forth above were evaluated based on the following numerical values (1-a) to (1-f). The results are presented in Table 1-5.
(1-a) The content of trans fatty acids among all constituent fatty acids is 5 wt.% or less;
(1-b) The content of lauric acid among all constituent fatty acids is from 1 to 13 wt.%;
(1-c) The content of saturated fatty acids having a chain length of 16 or more carbons among all constituent fatty acids is from 20 to 60 wt.%;
(1-d) The content of CN38 to CN46 triglycerides among all triglycerides is from 10 to 35 wt.%;
(1-e) The content of SO2 triglycerides among all triglycerides is 30 wt.% or less; and
(1-f) The content of S2O triglycerides among all triglycerides is from 10 to 40 wt.%.

It should be noted that "CN38 to CN46 triglyceride" represents a triglyceride in which the total number of carbons in the constituent fatty acids of the triglyceride in the oil and/or fat is from 38 to 46, the S2O triglyceride represents a triglyceride in which two molecules of S (where S represents a saturated fatty acid having from 16 to 20 carbons; the same applies hereinafter) and one molecule of O (where O represents oleic acid; the same applies hereinafter) are bonded, and the SO2 triglyceride represents a triglyceride in which one molecule of S and two molecules of O are bonded.

**(Table 1-5)**

| | Example 1-1 | Example 1-2 | Comparative Example 1-1 | Comparative Example 1-2 | Comparative Example 1-3 |
|---|---|---|---|---|---|
| (1-a) Content of trans fatty acids | 0.5 | 0.5 | 1.0 | 0.7 | 0.4 |
| (1-b) Content of lauric acid | 8.1 | 4.8 | 0.0 | 0.2 | 42.4 |
| (1-c) Content of saturated fatty acid having chain length of C16 or more | 38.7 | 41.1 | 7.5 | 35.6 | 11.6 |
| (1-d) Content of CN38 to CN46 triglycerides | 23.1 | 15.4 | 0.0 | 3.3 | 42.8 |
| (1-e) Content of SO2 triglycerides | 22.1 | 23.6 | 1.4 | 36.9 | - |
| (1-f) Content of S2O triglycerides | 23.4 | 27.9 | 4.6 | 14.4 | - |

### Discussion on Table 1-5

· Example 1-1 and Example 1-2 satisfied all of the numerical ranges of (1-a) to (1-f).
· Comparative Example 1-1 did not satisfy the numerical ranges of (1-b), (1-c), (1-d), and (1-f).
· Comparative Example 1-2 did not satisfy the numerical ranges of (1-b), (1-d), and (1-e).
· Comparative Example 1-3 did not satisfy at least the numerical ranges of (1-b), (1-c), or (1-d).

### Evaluation Method for Blooming and Graining using Oil and/or Fat

On the assumption of a general chocolate formulation in which cocoa butter accounts for 8 parts by weight of the oil content in the chocolate, evaluation of blooming and graining was attempted using a simple system of oil and/or fat alone.

91.3 parts by weight of Example 1-1 or 1-2, or Comparative Example 1-1, 1-2, or 1-3, 8 parts by weight of cocoa butter; and 0.7 parts by weight of fully hydrogenated high erucic acid rapeseed oil were mixed to prepare mixed oils. Note that, a small amount of fully hydrogenated high erucic acid rapeseed oil was blended for the purpose of crystallizing the oil and/or fat at an observation temperature (5°C).

The mixed oil was completely melted at 60°C or higher and dispensed into a petri dish. This petri dish was held at 60°C for 1 hour, at 30°C for 1 hour, and then at 5°C.

After storage, the crystal states after 7, 14, 21, and 28 days were visually checked, and the state of blooming and graining was evaluated based on the following evaluation criteria. Acceptance requirement was that each of blooming and graining was evaluated as 1 or more at the time point of 28 days after the start of storage at 5°C.

### Evaluation Criteria for Blooming

2: No bloom development is observed.
1: Bloom development is partly observed.
0: Bloom development is observed overall.

### Evaluation Criteria for Graining

2: No graining development is observed.
1: Graining development is partly observed.
0: Graining development is observed overall.

**(Table 1-6) Blooming Evaluation**

| | Example 1-1 | Example 1-2 | Comparative Example 1-1 | Comparative Example 1-2 | Comparative Example 1-3 |
|---|---|---|---|---|---|
| After 7 days | 2 | 2 | 2 | 0 | 0 |
| After 14 days | 2 | 2 | 2 | 0 | 0 |
| After 21 days | 2 | 2 | 2 | 0 | 0 |
| After 28 days | 2 | 2 | 2 | 0 | 0 |

**(Table 1-7) Graining Evaluation**

| | Example 1-1 | Example 1-2 | Comparative Example 1-1 | Comparative Example 1-2 | Comparative Example 1-3 |
|---|---|---|---|---|---|
| After 7 days | 2 | 2 | 0 | 2 | 2 |
| After 14 days | 2 | 2 | 0 | 2 | 2 |
| After 21 days | 2 | 2 | 0 | 2 | 2 |
| After 28 days | 2 | 2 | 0 | 2 | 2 |

### Discussion on Table 1-6 and Table 1-7

As can be seen from the results of the foregoing examination, each of Examples 1-1 and 1-2, which was oil and/or fat satisfying the indices (1-a) to (1-f), had satisfactory results in both blooming evaluation and graining evaluation using a simple system of oil and/or fat alone. In contrast, Comparative Examples 1-1, 1-2, and 1-3, each of which was oil and/or fat not satisfying one or more of the indices (1-a) to (1-f), had poor results in the blooming evaluation or the graining evaluation using a simple system of oil and/or fat alone.

### Chocolate Product Test

A chocolate test was carried out using oils and/or fats from Examples 1-1, and 1-2, Comparative Examples 1-1, 1-2, and 1-3 prepared as described above.

According to the formulation in Table 1-8, chocolate was prepared by performing refining by roll-refining and kneading by conching in a common method. Oils and/or fats from Examples 1-1, and 1-2, Comparative Examples 1-1, 1-2, and 1-3 were respectively used to prepare chocolates for Examples 1-3, and 1-4, Comparative Examples 1-4, 1-5, and 1-6. All of the prepared chocolates had plasticity as that in soft chocolate. Cocoa mass in the blended raw material contains 55 wt.% of cocoa butter, and hence the oil content of the present chocolate is 39.2%, and the contents of cocoa butter and of vegetable oil and/or fat in the oil content are calculated to be 10.7% and 89.3%, respectively.

The experimentally prepared chocolates were completely dissolved, then cooled to 45°C, after that poured into an aluminum cup, cooled at 5°C for 30 minutes, and subjected to blooming evaluation (Table 1-9) and graining evaluation (Table 1-10) in accordance with the evaluation criteria described above.

**(Table 1-8) Formulation for Chocolate Product Test**

| Raw materials | parts by weight |
|---|---|
| Sugar | 57.7 |
| Oil and/or fat for chocolate | 35.0 |
| Cocoa mass | 6.7 |
| Cocoa butter | 0.5 |
| Emulsifier | 0.1 |

**(Table 1-9) Blooming Evaluation Results**

| | Example 1-3 | Example 1-4 | Comparative Examples 1 to 4 | Comparative Example 1-5 | Comparative Example 1-6 |
|---|---|---|---|---|---|
| After 2 days | 2 | 2 | 2 | 0 | 0 |
| After 5 days | 2 | 2 | 2 | 0 | 0 |
| After 6 days | 2 | 2 | 2 | 0 | 0 |
| After 7 days | 2 | 2 | 2 | 0 | 0 |

**(Table 1-10) Graining Evaluation Results**

| | Example 1-3 | Example 1-4 | Comparative Examples 1 to 4 | Comparative Example 1-5 | Comparative Example 1-6 |
|---|---|---|---|---|---|
| After 2 days | 2 | 2 | 0 | 2 | 2 |
| After 5 days | 2 | 2 | 0 | 2 | 2 |
| After 6 days | 2 | 2 | 0 | 2 | 2 |
| After 7 days | 2 | 2 | 0 | 2 | 2 |

### Discussion on Chocolate Product Test Results

As can be seen from the results of the foregoing examination, Examples of the chocolate having blended with the oil and/or fat satisfying the indices (1-a) to (1-f) were enabled to be suppressed from bloom development and graining development during 7 days in storage, as in the results of the simple system of oil and/or fat alone. In contrast, Comparative Examples of the chocolate having blended with the oil and/or fat not satisfying one or more of the indices (1-a) to (1-f) were observed to have the occurrence of bloom or graining within 7 days in storage, as in the results of the simple system of oil and/or fat alone.

### <<Second Embodiment>>

A second embodiment of the present invention will be specifically described with reference to Examples.

### <Example 2-1>

Example 2-1 was obtained in the same manner as Example 1-1.

### <Example 2-2>

Example 2-2 was obtained in the same manner as Example 1-2.

### <Example 2-3>

Raw material oil (the content of lauric acid in the raw material oil: less than 1 wt.%, the ratio of palmitic acid content/stearic acid content: 3.3) composed of 43 wt.% of palm oil, 34 wt.% of palm fractionated high melting point fraction (iodine value: 12), 12 wt.% of fully hydrogenated high oleic sunflower oil (iodine value: 2), and 11 wt.% of high-oleic sunflower oil was randomly interesterified with sodium methylate, and the resultant interesterified oil and/or fat was subjected to hexane fractionation and acetone fractionation and thereby removing the high melting point fraction in each fractionation, and the resultant fractionated low-melting point fraction was decolored and deodorized in a common method to obtain Example 2-3.

As other comparative examples, palm super olein (Comparative Example 2-1) having an iodine value of 67 and palm kernel olein (Comparative Example 2-2) having an iodine value of 25 were used. All of them are available from Fuji Oil Co., Ltd.

The analysis values (fatty acid composition %, triglyceride composition (the total number of carbons) %, triglyceride composition (molecular species) %, SFC) of the oil and/or fat of each of Examples and Comparative Examples mentioned above are presented in the table below.

It should be noted that the triglyceride composition (molecular species) % is listed only for the main triglycerides. Note that Comparative Example 2-2 contains a certain amount or more of lauric acid (C12), and hence the analysis value is not listed from the viewpoint of the measurement accuracy.

**(Table 2-1) Analytical Value % of Fatty Acid Composition**

| | Example 2-1 | Example 2-2 | Example 2-3 | Comparative Example 2-1 | Comparative Example 2-2 |
|---|---|---|---|---|---|
| C6 | 0.1 | 0.1 | 0.0 | 0.0 | 0.0 |
| C8 | 1.5 | 0.8 | 0.0 | 0.0 | 3.7 |
| C10 | 1.0 | 0.6 | 0.0 | 0.0 | 3.3 |
| C12 | 8.1 | 4.8 | 0.0 | 0.2 | 42.4 |
| C14 | 2.6 | 1.9 | 0.8 | 1.0 | 13.1 |
| C16 | 29.8 | 31.7 | 29.8 | 32.2 | 8.9 |
| C16F1 | 0.1 | 0.1 | 0.0 | 0.4 | 0.0 |
| C18 | 8.7 | 9.2 | 7.5 | 3.0 | 2.6 |
| C18F1t | 0.2 | 0.1 | 0.0 | 0.1 | 0.3 |
| C18F1c | 39.5 | 40.5 | 49.9 | 49.3 | 22.1 |
| C 18F2t | 0.3 | 0.4 | 0.0 | 0.5 | 0.0 |
| C 18F2c | 7.9 | 9.5 | 11.6 | 12.6 | 3.4 |
| C18F3t | 0.0 | 0.0 | 0.0 | 0.1 | 0.1 |
| C18F3c | 0.0 | 0.1 | 0.0 | 0.2 | 0.0 |
| C20 | 0.2 | 0.2 | 0.3 | 0.3 | 0.1 |
| C22 | 0.0 | 0.0 | 0.0 | 0.1 | 0.0 |

**(Table 2-2) Analysis Values % of Triglyceride Composition (the total number of carbons)**

| | Example 2-1 | Example 2-2 | Example 2-3 | Comparative Example 2-1 | Comparative Example 2-2 |
|---|---|---|---|---|---|
| CN24 | 0.0 | 0.0 | 0.0 | 0.0 | 0.1 |
| CN26 | 0.0 | 0.0 | 0.0 | 0.0 | 0.6 |
| CN28 | 0.0 | 0.0 | 0.0 | 0.0 | 0.6 |
| CN30 | 0.4 | 0.2 | 0.0 | 0.0 | 1.7 |
| CN32 | 0.8 | 0.5 | 2.3 | 0.0 | 8.4 |
| CN34 | 0.8 | 0.4 | 8.3 | 0.7 | 10.1 |
| CN36 | 3.4 | 3.1 | 5.5 | 4.1 | 19.2 |
| CN38 | 2.6 | 2.3 | 1.2 | 3.2 | 12.4 |
| CN40 | 1.6 | 0.8 | 0.0 | 0.0 | 7.0 |
| CN42 | 3.5 | 1.9 | 0.0 | 0.0 | 9.2 |
| CN44 | 3.6 | 2.4 | 0.0 | 0.0 | 7.6 |
| CN46 | 11.8 | 8.0 | 0.0 | 0.1 | 6.5 |
| CN48 | 10.3 | 7.6 | 3.3 | 0.2 | 7.6 |
| CN50 | 19.9 | 24.0 | 17.5 | 23.6 | 3.1 |
| CN52 | 30.3 | 35.6 | 42.1 | 53.5 | 2.9 |
| CN54 | 10.7 | 12.9 | 19.7 | 14.3 | 2.7 |
| CN56 | 0.3 | 0.2 | 0.0 | 0.3 | 0.0 |

**(Table 2-3) Analysis Value % of Triglyceride Composition (molecular species)**

| | Example 2-1 | Example 2-2 | Example 2-3 | Comparative Example 2-1 |
|---|---|---|---|---|
| PO2 | 17.4 | 18.4 | 28.2 | 33.1 |
| P2O | 15.7 | 18.1 | 12.1 | 12.7 |
| PPP | 0.2 | 0.2 | 0.3 | 0.0 |
| StO2 | 4.7 | 5.2 | 6.7 | 3.8 |
| PStO | 6.7 | 8.3 | 2.7 | 1.5 |
| PPSt | 0.0 | 0.0 | 0.1 | 0.0 |
| St2O | 1.0 | 1.5 | 0.4 | 0.2 |
| PStSt | 0.0 | 0.0 | 0.0 | 0.0 |
| StStSt | 0.0 | 0.0 | 0.0 | 0.0 |
| SO2 | 22.1 | 23.6 | 34.9 | 36.9 |
| S2O | 23.4 | 27.9 | 15.2 | 14.4 |
| SSS | 0.2 | 0.2 | 0.4 | 0.0 |

**(Table 2-4) SFC Analysis Values**

| | Example 2-1 | Example 2-2 | Example 2-3 | Comparative Example 2-1 | Comparative Example 2-2 |
|---|---|---|---|---|---|
| 0°C | 37.3 | 35.5 | 21.3 | 3.1 | 70.7 |
| 5°C | 30.5 | 26.4 | 16.4 | 0.4 | 67.5 |
| 10°C | 18.7 | 19.1 | 7.6 | 0.2 | 57.1 |
| 15°C | 7.2 | 7.7 | 3.4 | 0.1 | 37.7 |
| 20°C | 0.3 | 0.2 | 0.0 | 0.0 | 15.9 |
| 25°C | 0.0 | -0.1 | 0.0 | 0.0 | 0.3 |

Examples 2-1, 2-2, and 2-3, Comparative Examples 2-1, and 2-2 were evaluated based on the following numerical values (2-a) to (2-e) and (2-g). The results are presented in Table 2-5.
(2-a) The content of trans fatty acids among all constituent fatty acids is 5 wt.% or less;
(2-b) The content of saturated fatty acids having a chain length of 16 or more carbons among all constituent fatty acids is from 20 to 60 wt.%;
(2-c) The content of CN38 to CN46 triglycerides among all triglycerides is 40 wt.% or less;
(2-d) The content of SO2 triglycerides among all triglycerides is 40 wt.% or less;
(2-e) The content of S2O triglycerides among all triglycerides is from 10 to 40 wt.%; and
(2-g) SFC at 10°C is from 5 to 40%.

It should be noted that "CN38 to CN46 triglyceride" represents a triglyceride in which the total number of carbons in the constituent fatty acids of the triglyceride in the oil and/or fat is from 38 to 46, the S2O triglyceride represents a triglyceride in which two molecules of S (where S represents a saturated fatty acid having from 16 to 20 carbons; the same applies hereinafter) and one molecule of O (where O represents oleic acid; the same applies hereinafter) are bonded, and the SO2 triglyceride represents a triglyceride in which one molecule of S and two molecules of O are bonded.

**(Table 2-5)**

| | Example 2-1 | Example 2-2 | Example 2-3 | Comparative Example 2-1 | Comparative Example 2-2 |
|---|---|---|---|---|---|
| (2-a) Trans fatty acid content | 0.5 | 0.5 | 0.0 | 0.7 | 0.4 |
| (2-b) Content of saturated fatty acids having chain length of CN16 or more | 38.7 | 41.1 | 37.6 | 35.6 | 11.6 |
| (2-c) Content of CN38 to CN46 triglycerides | 23.1 | 15.4 | 1.2 | 3.3 | 42.8 |
| (2-d) Content of SO2 triglycerides | 22.1 | 23.6 | 34.9 | 36.9 | - |
| (2-e) Content of S2O triglycerides | 23.4 | 27.9 | 15.2 | 14.4 | - |
| (2-g) SFC at 10°C | 18.7 | 19.1 | 7.6 | 0.2 | 57.1 |

### Discussion on Table 2-5

· Examples 2-1, 2-2, and 2-3 satisfied all of the numerical ranges of (2-a) to (2-e) and (2-g).
· Comparative Example 2-1 did not satisfy the numerical range of (2-g).
· Comparative Example 2-2 did not satisfy at least the numerical ranges of (2-b), (2-c), or (2-g).

### Crystal form analysis by model storage test

Ten parts by weight of an oil and/or fat sample selected from Examples 2-1 to 2-3 or Comparative Examples 2-1 to 2-2 set forth above was mixed with 90 parts by weight of cocoa butter, a small amount of the oil and/or fat sample was applied onto a glass plate for an X-ray diffractometer, and then a tempering operation was performed by temperature adjustment, the mixture was then stored under cycling conditions of 20°C/32°C, and a crystal form was measured at regular intervals with the X-ray diffractometer. The measurement was carried out by using an X-ray diffractometer MiniFlex600 (available from Rigaku Corporation, maximum rated output: 600 W, rated voltage: 40 kV, rated current: 15 mA) under the conditions of scan mode 2θ/θ coordinated measurement, a divergence slit of 1.25°, a receiving slit of 0.3 mm, a diffusion slit of 1.25°, a monochrome receiving slit of 0.8 mm, a start angle of 2.1°, and an end angle of 30.0°, and thereby measuring the X-ray diffraction image of the sample. The crystal form was analyzed based on the obtained X-ray diffraction image to evaluate whether the V-type crystal or the crystal transition to the VI-type crystal was suppressed. The results are presented in Table 2-6.

**(Table 2-6) Model Storage Test Results**

| | Example 2-1 | Example 2-2 | Example 2-3 | Comparative Example 2-1 | Comparative Example 2-2 |
|---|---|---|---|---|---|
| After 0 day | V | V | V | V | V |
| After 3 days | V | V | V | V | V |
| After 4 days | V | V | V | V | V |
| After 5 days | V | V | V | V | V |
| After 6 days | V | V | V | V | V |
| After 10 days | V | V | V | VI | VI |

### Discussion on Table 2-6

As can be seen from the results of the foregoing examinations, in Examples 2-1, 2-2, and 2-3, each of which encompasses the oil and/or fat satisfying the indices (2-a) to (2-e) and (2-g), the crystal form maintained the V-type until 10 days in storage as evaluated by the model storage test. In contrast, in Comparative Examples 2-1 and 2-2, each of which was the oil and/or fat not satisfying one or more of the indices (2-a) to (2-e) and (2-g), the crystal form changed from the V-type to the VI-type after 10 days in cycling storage, and it was indicated that the crystal transition suppressing effect was insufficient.

### Chocolate Test

A chocolate test was performed using the oil and/or fat for chocolate prepared above.

According to the formulation in Table 2-7, chocolates were prepared by performing refining by roll-refining and kneading by conching in a common method. Oils and/or fats for chocolate from Examples 2-1, 2-2, and 2-3, Comparative Examples 2-1, and 2-2 were respectively used to prepare chocolates for Examples 2-4, 2-5, and 2-6, Comparative Examples 2-3, and 2-4. Cocoa mass in the blended raw material contains 55 wt.% of cocoa butter, and thus the oil content of the present chocolate is 34.7%, and the content of cocoa butter and the content of vegetable oil and/or fat in the oil content are calculated to be 90.2% and 9.8%, respectively.

The experimentally prepared chocolates were completely dissolved and then cooled to 32°C, after that the seed temper was taken out and poured into a mold, cooled at 5°C for 30 minutes, and then released from the mold. The evaluation of blooming (Table 2-8) was performed according to Evaluation Criteria of Blooming described later.

**(Table 2-7)**

| Raw materials | parts by weight |
|---|---|
| Sugar | 46.5 |
| Oil and/or fat for chocolate | 3.5 |
| Cocoa mass | 40.7 |
| Cocoa butter | 8.8 |
| Emulsifier | 0.5 |

### Evaluation Criteria for Blooming

Criterion for acceptance was set at 2 or more.
· 5: No loss of gloss is observed.
· 4: Very slight loss of gloss is observed.
· 3: Slight loss of gloss is observed.
· 2: Apparent loss of gloss is observed.
· 1: Bloom development is observed.

**(Table 2-8)**

| | Example 2-4 | Examples 2 to 5 | Example 2-6 | Comparative Example 2-3 | Comparative Example 2-4 |
|---|---|---|---|---|---|
| After 3 days | 5 | 5 | 5 | 5 | 5 |
| After 4 days | 5 | 5 | 5 | 4 | 4 |
| After 5 days | 5 | 5 | 5 | 2 | 2 |
| After 6 days | 4 | 4 | 4 | 2 | 2 |
| After 7 days | 4 | 4 | 4 | 2 | 2 |
| After 10 days | 3 | 3 | 4 | 1 | 1 |
| After 17 days | 2 | 2 | 2 | 1 | 1 |

### Discussion on Table 2-8

As presented in the foregoing examination results, Examples of the chocolates blended with the oil and/or fat satisfying the indices (2-a) to (2-e) and (2-g) had suppressed from the bloom development until 10 days in storage, as in the results of the model storage test. In contrast, Comparative Examples of the chocolates blended with the oil and/or fat not satisfying one or more of the indices (2-a) to (2-e) and (2-g) were observed to have bloom development by 10 days in storage, as in the results of the model storage test.

### Industrial Applicability

Using the oil and/or fat for chocolate of the present invention can suppress the occurrence of blooming and/or graining in chocolates according to the first embodiment. In particular, in soft chocolates, the occurrence of blooming and/or graining can be suppressed.

In addition, bloom development can be suppressed in the chocolates according to the second embodiment.

## Claims

1. An oil and/or fat for chocolate, satisfying all requirements (a) to (e) set forth below:
(a) a content of trans fatty acids is 5 wt.% or less among all constituent fatty acids;
(b) a content of saturated fatty acids having a chain length of 16 or more carbons is from 20 to 60 wt.% among all constituent fatty acids;
(c) a content of CN38 to CN46 triglycerides is 40 wt.% or less among all triglycerides;
(d) a content of SO2 triglycerides is 40 wt.% or less among all triglycerides; and
(e) a content of S2O triglycerides is from 10 to 40 wt.% among all triglycerides,
wherein "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

2. The oil and/or fat for chocolate according to claim 1, further satisfying requirements (c2), (d2), and (f) set forth below:
(c2) a content of CN38 to CN46 triglycerides is from 10 to 35 wt.% among all triglycerides;
(d2) a content of SO2 triglycerides is 30 wt.% or less among all triglycerides; and
(f) a content of lauric acid is from 1 to 13 wt.% among all constituent fatty acids.

3. The oil and/or fat for chocolate according to claim 1, wherein a content of unsaturated fatty acids is from 35 to 58 wt.% among all constituent fatty acids.

4. The oil and/or fat for chocolate according to claim 2, wherein a content of unsaturated fatty acids is from 35 to 58 wt.% among all constituent fatty acids.

5. The oil and/or fat for chocolate according to claim 1, satisfying all requirements for SFC% set forth below:
· SFC at 0°C is from 10 to 60%;
· SFC at 5°C is from 5 to 50%;
· SFC at 10°C is 40% or less; and
· SFC at 20°C is 9% or less.

6. The oil and/or fat for chocolate according to claim 2, satisfying all requirements for SFC% set forth below:
· SFC at 0°C is from 10 to 60%;
· SFC at 5°C is from 5 to 50%;
· SFC at 10°C is 40% or less; and
· SFC at 20°C is 9% or less.

7. The oil and/or fat for chocolate according to claim 3, satisfying all requirements for SFC% set forth below:
· SFC at 0°C is from 10 to 60%;
· SFC at 5°C is from 5 to 50%;
· SFC at 10°C is 40% or less; and
· SFC at 20°C is 9% or less.

8. The oil and/or fat for chocolate according to claim 4, satisfying all requirements for SFC% set forth below:
· SFC at 0°C is from 10 to 60%;
· SFC at 5°C is from 5 to 50%;
· SFC at 10°C is 40% or less; and
· SFC at 20°C is 9% or less.

9. Chocolate made by using from 5 to 65 wt.% of the oil and/or fat for chocolate according to any one of claims 1 to 8.

10. The oil and/or fat for chocolate according to claim 1, further satisfying requirement (g) set forth below:
(g) SFC at 10°C is from 5 to 40%.

11. The oil and/or fat for chocolate according to claim 1, wherein a ratio of palmitic acid content/stearic acid content is 7 or less in constituent fatty acid composition.

12. The oil and/or fat for chocolate according to claim 10, wherein a ratio of palmitic acid content/stearic acid content is 7 or less in constituent fatty acid composition.

13. The oil and/or fat for chocolate according to claim 1, wherein a content of lauric acid is 13 wt.% or less among all constituent fatty acids.

14. The oil and/or fat for chocolate according to claim 10, wherein a content of lauric acid is 13 wt.% or less among all constituent fatty acids.

15. The oil and/or fat for chocolate according to claim 11, wherein a content of lauric acid is 13 wt.% or less among all constituent fatty acids.

16. The oil and/or fat for chocolate according to claim 12, wherein a content of lauric acid is 13 wt.% or less among all constituent fatty acids.

17. Chocolate made by using from 0.2 to 15 wt.% of the oil and/or fat for chocolate according to claim 1 or any one of claims 10 to 16.

18. A bloom inhibitor, comprising the oil and/or fat for chocolate according to claim 1 or any one of claims 10 to 16.

19. A method for producing an oil and/or fat for chocolate, the oil and/or fat satisfying all requirements (a) to (e) set forth below, the method comprising removing, by fractionation, a high melting point fraction from an interesterified oil having lauric acid content of 25 wt.% or less in constituent fatty acids and a ratio of palmitic acid content/stearic acid content of from 1.5 to 5;
(a) a content of trans fatty acids is 5 wt.% or less among all constituent fatty acids;
(b) a content of saturated fatty acids having a chain length of 16 or more carbons is from 20 to 60 wt.% among all constituent fatty acids;
(c) a content of CN38 to CN46 triglycerides is 40 wt.% or less among all triglycerides;
(d) a content of SO2 triglycerides is 40 wt.% or less among all triglycerides; and
(e) a content of S2O triglycerides is from 10 to 40 wt.% among all triglycerides,
wherein "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

20. The method for producing an oil and/or fat for chocolate according to claim 19, wherein the oil and/or fat further satisfies requirements (c2), (d2), and (f) set forth below:
(c2) a content of CN38 to CN46 triglycerides is from 10 to 35 wt.% among all triglycerides;
(d2) a content of SO2 triglycerides is 30 wt.% or less among all triglycerides; and
(f) a content of lauric acid is from 1 to 13 wt.% among all constituent fatty acids.

21. The method for producing an oil and/or fat for chocolate according to claim 19, wherein the oil and/or fat further satisfies requirement (g) set forth below:
(g) SFC at 10°C is from 5 to 40%.

22. A method for suppressing blooming and/or graining of soft chocolates by blending an oil and/or fat for chocolate satisfying all requirements (a) to (e) set forth below:
(a) a content of trans fatty acids is 5 wt.% or less among all constituent fatty acids;
(b) a content of saturated fatty acids having a chain length of 16 or more carbons is from 20 to 60 wt.% among all constituent fatty acids;
(c) a content of CN38 to CN46 triglycerides is 40 wt.% or less among all triglycerides;
(d) a content of SO2 triglycerides is 40 wt.% or less among all triglycerides; and
(e) a content of S2O triglycerides is from 10 to 40 wt.% among all triglycerides,
wherein "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

23. The method according to claim 22, wherein the oil and/or fat further satisfies requirements (c2), (d2), and (f) set forth below:
(c2) a content of CN38 to CN46 triglycerides is from 10 to 35 wt.% among all triglycerides;
(d2) a content of SO2 triglycerides is 30 wt.% or less among all triglycerides; and
(f) a content of lauric acid is from 1 to 13 wt.% among all constituent fatty acids.

24. A method for suppressing bloom development in tempering-type chocolates by blending an oil and/or fat for chocolate satisfying all requirements (a) to (e) set forth below:
(a) a content of trans fatty acids is 5 wt.% or less among all constituent fatty acids;
(b) a content of saturated fatty acids having a chain length of 16 or more carbons is from 20 to 60 wt.% among all constituent fatty acids;
(c) a content of CN38 to CN46 triglycerides is 40 wt.% or less among all triglycerides;
(d) a content of SO2 triglycerides is 40 wt.% or less among all triglycerides; and
(e) a content of S2O triglycerides is from 10 to 40 wt.% among all triglycerides,
wherein "CN38 to CN46 triglyceride" represents a triglyceride in which the total number of carbons in constituent fatty acids of the triglyceride in the oil and/or fat is from 38 to 46, the SO2 triglyceride represents a triglyceride in which one molecule of S (where S represents a saturated fatty acid having from 16 to 20 carbons; the same applies hereinafter) and two molecules of O (where O represents oleic acid; the same applies hereinafter) are bonded, and the S2O triglyceride represents a triglyceride in which two molecules of S and one molecule of O are bonded.

25. The method according to claim 24, wherein the oil and/or fat further satisfies requirement (g) set forth below:
(g) SFC at 10°C is from 5 to 40%.
